# FASCICULE DE BREVET EUROPEEN

(11) **EP 3 802 088 B1**
(45) Date de publication et mention de la délivrance du brevet: **25.09.2024**
(21) Numéro de dépôt: 19726607.5
(22) Date de dépôt: 17.05.2019
(51) Int. Cl.: B29D 30/66

(54) **PROCÉDÉ DE FABRICATION D'UN BANDAGE PNEUMATIQUE À BLOCS DE SCULPTURE RENFORCÉS DE MANIÈRE OBLIQUE**
VERFAHREN ZUR HERSTELLUNG EINES REIFENS MIT SCHRÄG VERSTÄRKTEN LAUFFLÄCHENBLÖCKEN
METHOD FOR MANUFACTURING A TYRE WITH OBLIQUELY REINFORCED TREAD BLOCKS

(30) Priorité: 29.05.2018 FR 1854595
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: ROUBY, Mickael, 63040 Clermond Ferrand Cedex 9 (FR); MONNEREAU, Patrice, 63040 Clermond Ferrand Cedex 9 (FR); BESSAC, Christophe, 63040 Clermond Ferrand Cedex 9 (FR)
(74) Mandataire: M.F.P. Michelin
(86) Numéro de dépôt international: PCT/EP2019/062881
(87) Numéro de publication internationale: WO 2019/228830

(56) Documents cités:
- EP-A1- 1 870 259
- WO-A1-2015/108744
- AU-A- 2 467 971
- DE-A1- 102012 214 485
- DE-A1- 19 542 996
- DE-B- 1 289 306
- US-A- 1 948 311
- US-A- 3 565 716
- US-A- 5 298 216

## Description

### DOMAINE TECHNIQUE DE L'INVENTION

La présente invention se rapporte à un procédé de fabrication d'un bandage pneumatique à blocs de sculpture renforcés permettant de limiter le basculement des blocs de sculpture.

### ARRIÈRE-PLAN TECHNIQUE DE L'INVENTION

L'intégration d'un renfort pendant la confection d'une bande de roulement dans un procédé de fabrication centralisé n'est pas envisageable économiquement, car lors de l'assemblage de ces produits semi-finis composites, les chutes induites ne sont pas recyclables, c'est-à-dire deviennent des pertes de matière sans possibilité de réutilisation.

Un procédé de fabrication d'une bande de roulement à base de matériau caoutchoutique est décrit dans le brevet US 1,948,311. Un exemple pour une bande de roulement renforcée peut être trouvé dans la demande EP 1870259 A1.

### RÉSUMÉ DE L'INVENTION

L'invention a pour but de proposer un procédé de fabrication d'une bande de roulement recyclable et permettant d'obtenir un bandage pneumatique à blocs de sculpture renforcés.

À cet effet, l'invention se rapporte à un procédé de fabrication d'une bande de roulement à base de matériau caoutchoutique cru selon la revendication 1, le procédé comporte les étapes suivantes :
- Former une ébauche de bande de roulement à base de matériau caoutchoutique cru comportant au moins un bloc de sculpture, chaque bloc de sculpture comportant une portion centrale et au moins une portion latérale s'étendant le long de la portion centrale ;
- Monter au moins une nappe de renfort sur au moins une partie de la portion centrale ;
- Recouvrir la portion centrale à l'aide de la portion latérale afin que le bloc de sculpture enveloppe la nappe de renfort.

Avantageusement selon l'invention, le procédé permet de former une bande de roulement en matériau caoutchoutique cru dont les chutes peuvent être recyclées. Le procédé permet en outre sa mise en oeuvre à part ou directement sur une ébauche, comme par exemple sur une carcasse, de bandage pneumatique. La bande de roulement peut ainsi être renforcée et montée sur l'ébauche du bandage pneumatique avant que l'ensemble soit réticulé.

Avantageusement selon l'invention, chaque bloc de sculpture est créé à partir de plusieurs portions en matériau caoutchoutique cru qui peuvent être monobloc ou non. La géométrie de la portion centrale permet avantageusement de choisir l'angle que fait la nappe de renfort par rapport à la surface de contact de la bande de roulement. L'orientation de la nappe de renfort contre la portion centrale est maintenue par recouvrement de la portion latérale. Cette dernière forme donc la partie du bandage pneumatique destinée à être en contact avec le sol. On comprend également que la nappe de renfort peut ainsi être de natures très variées.

L'invention peut également comporter l'une ou plusieurs des caractéristiques optionnelles suivantes, prises seules ou en combinaison.

Chaque portion centrale et sa (ou ses) portion(s) latérale(s) associée(s) sont reliés par une base ce qui permet de garantir une géométrie entre les portions.

La portion centrale peut être est de forme prismatique à base polygonale dont au moins une face est destinée à recevoir la nappe de renfort ce qui permet avantageusement de choisir un angle, que fait la nappe de renfort par rapport à la surface de contact de la bande de roulement, sensiblement constant.

La portion centrale est de forme prismatique à base triangulaire dont deux faces adjacentes sont destinées à recevoir la nappe de renfort ce qui permet de placer une nappe de renfort par exemple en recouvrement total de la surface supérieure de la portion centrale. On comprend qu'on peut ainsi obtenir un profilé de nappe de renfort de section en chevron dont l'arête supérieure est orientée vers la surface de contact de la bande de roulement.

Chaque portion latérale est de forme prismatique à base polygonale dont au moins une face est utilisée pour recouvrir une partie de la portion centrale permettant de coïncider avec au moins une face de la portion centrale. La forme prismatique permet également de former la forme externe des blocs de sculpture de l'ébauche de la bande de roulement.

Avantageusement selon l'invention, l'ébauche de bande de roulement peut comporter plusieurs blocs de sculpture. Elle peut également être monobloc ce qui permet de garantir sa géométrie et de facilement la monter sur l'ébauche du bandage pneumatique.

L'étape de formation de l'ébauche de bande de roulement peut être réalisée par extrusion afin de fournir un profilé avec la section souhaitée pour tout ou partie de l'ébauche de la bande de roulement avec la longueur nécessaire au bandage pneumatique à fabriquer.

Le procédé peut comporter en outre une étape finale de roulage permettant d'améliorer l'adhérence de la (des) portion(s) latérale(s) contre sa (leur) portion centrale associée.

En outre, l'invention se rapporte à un procédé de fabrication d'un bandage pneumatique, **caractérisé en ce qu'**il comporte une étape de fabrication de la bande de roulement réalisée par le procédé de fabrication tel que présenté plus haut.

Le procédé de fabrication du bandage pneumatique permet donc de réaliser une ébauche de bande de roulement avec au moins un bloc de sculpture renforcés pouvant être intégrée avec des étapes de fabrication conventionnelles de bandage pneumatique, c'est-à-dire sans adaptation particulière.

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- La figure 1 est une vue en coupe partielle d'un bandage pneumatique obtenu selon un premier mode de réalisation du procédé selon l'invention ;
- La figure 2 est une vue en perspective partielle d'une ébauche de bande de roulement selon le premier mode de réalisation du procédé selon l'invention ;
- La figure 3 est une vue en perspective partielle d'une étape de montage de nappes de renfort sur l'ébauche de bande de roulement selon le premier mode de réalisation du procédé selon l'invention ;
- La figure 4 est une vue en perspective d'une came de déplacement et d'un galet de roulage de la portion latérale pour la mise en oeuvre du procédé selon l'invention ;
- La figure 5 est une vue en perspective partielle d'une ébauche de bande de roulement selon une variante du premier mode de réalisation du procédé selon l'invention ;
- La figure 6 est une vue en coupe partielle d'un bandage pneumatique obtenu selon la variante du premier mode de réalisation du procédé selon l'invention ;
- La figure 7 est une vue en perspective partielle d'une ébauche de bande de roulement selon un deuxième mode de réalisation du procédé selon l'invention ;
- La figure 8 est une vue en coupe partielle d'un bandage pneumatique obtenu selon le deuxième mode de réalisation du procédé selon l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

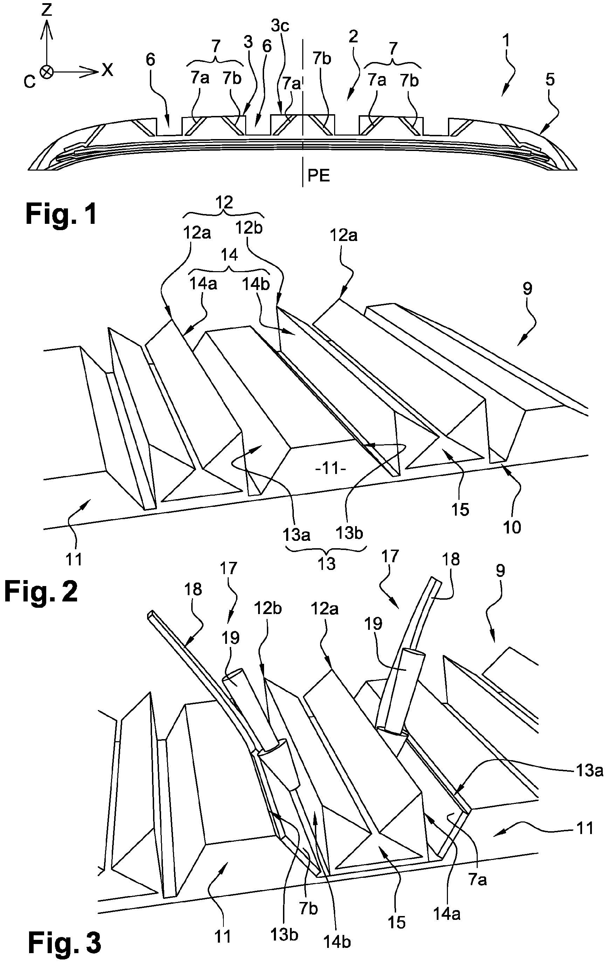

Sur les figures 1, 6 et 8, on a représenté des axes C, X, Z orthogonaux entre eux correspondant aux orientations habituelles circonférentielle (C), axiale (X) et radiale (Z) d'un bandage pneumatique 1. Par « bandage pneumatique », on entend tous les types de bandages élastiques soumis à une pression interne.

Par « matériau caoutchoutique », ou « gomme », on entend un matériau à base d'une composition réticulable comprenant un élastomère, par exemple diénique. On appelle « matériau caoutchoutique cru » ou « gomme crue » un tel matériau avant réticulation.

Par « carcasse », on entend toute partie n'appartenant pas à la bande de roulement.

Par « bande de roulement », on entend une quantité de matériau caoutchoutique délimitée par des surfaces latérales et par deux surfaces principales dont l'une, appelée surface de roulement, est destinée à entrer en contact avec une chaussée lorsque le bandage pneumatique roule.

L'invention a pour but de proposer un procédé de fabrication d'une bande de roulement recyclable et permettant d'obtenir un bandage pneumatique à blocs de sculpture renforcés.

L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, « Poids-lourds » - c'est-à-dire métro, bus, engins de transport routier (camions, tracteurs, remorques), véhicules hors-la-route tels qu'engins agricoles ou de génie civil -, ou autres véhicules de transport ou de manutention. L'invention s'applique également aux véhicules non motorisés comme notamment une remorque, une semi-remorque ou une caravane.

Le procédé de fabrication selon l'invention permet d'obtenir un bandage pneumatique 1 dont les blocs 3 de sculpture 2 de la bande 5 de roulement (parties entre les rainures 6 circonférentielles du bandage pneumatique 1) sont rigidifiés comme illustré à la figure 1. La rigidification est obtenue par des nappes 7 de renfort présentes dans les blocs 3 de sculpture 2 et orientées de manière oblique par rapport à la surface de roulement afin de limiter leur déformation pour améliorer le comportement et l'usure du bandage pneumatique 1.

Plus précisément, dans l'exemple illustré à la figure 1, on peut voir que, sur la section méridienne partielle de la bande 5 de roulement (plan de coupe orienté selon les axes X-Z) obtenue selon un premier mode de réalisation de l'invention, les nappes 7 de renfort forment des profilés à section en chevrons tronqués dans chaque bloc 3 de sculpture 2. Un plan équatorial PE (orienté selon les axes C-Z), illustré à la figure 1, est perpendiculaire à l'axe de rotation du pneumatique et au plan de coupe de la figure 1, et situé à mi-distance de la bande 5 de roulement le long de l'axe X.

Ainsi, pour le bloc 3c dans lequel passe le plan PE, les première 7a et deuxième 7b nappes de renfort sont symétriques par rapport au plan équatorial PE, partent sensiblement du fond de la rainure 6 adjacente (une épaisseur de matériau caoutchoutique est visible à la figure 1 entre le fond de chaque rainure 6 et chacune des nappes 7a, 7b de renfort) et s'étendent obliquement dans le bloc 3c de sculpture 2 vers le plan équatorial PE jusqu'à la surface supérieure du bloc 3c sans couper le plan équatorial PE. On comprend que cette configuration, avantageusement selon l'invention, permet de limiter le basculement des blocs 3 de sculpture 2 lorsque le bandage pneumatique 1 est sollicité.

Ce bandage pneumatique 1 est obtenu grâce à un premier mode de réalisation de procédé selon l'invention. Plus précisément, l'invention se rapporte à un procédé de fabrication d'une bande 5 de roulement à base de matériau caoutchoutique cru et à un procédé de fabrication d'un bandage pneumatique 1 utilisant le procédé de fabrication de bande 5 de roulement.

Selon le premier mode de réalisation, le procédé de fabrication de la bande 5 de roulement comporte une première étape destinée à former une ébauche 9 de bande 5 de roulement à base de matériau caoutchoutique cru. L'ébauche 9 comporte au moins un bloc 3 de sculpture 2 séparé, c'est-à-dire divisé en plusieurs portions 11, 12. Selon l'invention, chaque bloc 3 de sculpture 2 comporte une portion centrale 11 et des première 12a et deuxième 12b portions latérales. Dans l'exemple illustré à la figure 2, on peut voir que les première 12a et deuxième 12b portions latérales s'étendent, de manière préférée, respectivement de part et d'autre de la portion centrale 11.

On comprend donc dans le premier mode de réalisation qu'il y a autant de portion latérale qu'il y a de nappe de renfort à noyer dans le bloc 3 de sculpture 2 associé. À titre nullement limitatif, si, en variante, une unique nappe 7 de renfort orientée de manière oblique était souhaitée dans au moins un bloc 3 de sculpture 2, cela occasionnerait une étape de formation d'une ébauche 9 de bande 5 de roulement avec une portion centrale 11 et une unique portion latérale 12.

La figure 2 n'est qu'une représentation partielle de l'ébauche 9. Le profil visible à son premier plan s'étend selon une longueur plus grande que représentée à la figure 2 afin de permettre la formation de la bande 5 de roulement sur toute la circonférence du bandage pneumatique 1.

Pour chaque bloc 3 de sculpture 2, le profil peut ainsi comporter une portion centrale 11 de forme prismatique à base polygonale. Dans l'exemple de la figure 2, la base est de forme trapézoïdale dont les deux faces 13a, 13b non parallèles sont destinées à recevoir chacune une nappe 7, 7a, 7b de renfort. On comprend donc que la géométrie de chaque face 13, 13a, 13b de réception permet de choisir l'orientation et la courbure, que fera sa nappe 7, 7a, 7b de renfort associée dans l'épaisseur du bloc 3 de sculpture 2.

Ainsi, au lieu de comporter des sections rectilignes comme illustré à la figure 1, chaque nappe 7, 7a, 7b de renfort pourrait en variante être, par exemple, concave ou convexe en adaptant en conséquence chaque face 13, 13a, 13b de réception de la portion centrale 11.

À titre nullement limitatif, chaque portion centrale 11 et chaque portion latérale 12 associée peuvent être reliés par une base commune 10 ce qui permet de garantir la géométrie entre les portions 11, 12 et, plus généralement, de l'ébauche 9 de la bande 5 de roulement.

Préférentiellement, chaque portion latérale 12, 12a, 12b est de forme prismatique à base polygonale. De plus, au moins une face 14, 14a, 14b du polygone est utilisée pour recouvrir au moins une partie de la portion centrale 11 permettant de coïncider avec au moins la zone de la portion centrale 11 qui sera recouverte par la nappe 7, 7a, 7b de renfort. La forme prismatique permet également de former la géométrie externe des blocs 3 de sculpture 2 de l'ébauche 9 de la bande 5 de roulement. En effet, les faces qui ne recouvrent pas la portion centrale 11 sont destinées à former tout ou partie de l'enveloppe extérieure des blocs 3 de sculpture 2.

Dans l'exemple particulier de la figure 2, on peut voir que deux portions latérales 12, 12a, 12b de deux blocs 3 de sculpture 2 différents se font face. Plus précisément, les bases triangulaires de chaque prisme des portion latérale 12a, 12b se faisant face, forment un creux 15 à profil sensiblement triangulaire, l'un des sommets du creux 15 étant formé par les arêtes des bases triangulaires des portion latérale 12a, 12b se faisant face. À la figure 2, ces arêtes ne se touchent pas, toutefois, s'agissant d'une fabrication industrielle, il est possible le cas échéant que certaines arêtes puissent se toucher.

Comme illustré à la figure 2, l'ébauche 9 de bande 5 de roulement peut donc comporter plusieurs blocs 3 de sculpture 2 divisés ce qui n'empêche pas la possibilité que l'ébauche 9 puisse être monobloc afin de garantir sa géométrie et de facilement la monter sur l'ébauche d'un bandage pneumatique 1.

En effet, l'étape de formation de l'ébauche 9 de bande 5 de roulement peut être par exemple réalisée par extrusion. Il est ainsi possible de fabriquer un profilé avec la section souhaitée pour tout ou partie de l'ébauche 9 de la bande 5 de roulement avec la longueur nécessaire au bandage pneumatique 1 à fabriquer.

Le procédé selon le premier mode de réalisation de l'invention comporte une deuxième étape destinée à monter au moins une nappe 7, 7a, 7b de renfort sur au moins une partie 13, 13a, 13b de la portion centrale 11. Un exemple d'une telle étape est illustré à la figure 3. On peut voir que les nappes 7, 7a, 7b de renfort sont posées en continu sur les faces 13a, 13b de réception des portions centrale 11 à l'aide de dispositifs 17 d'approvisionnement. Chaque dispositif 17 d'approvisionnement peut, par exemple, comporter une tête 18 de pose alimentée par une bobine de nappe 7, 7a, 7b de renfort et au moins un galet 19 de placage. Chaque nappe 7, 7a, 7b de renfort est ainsi amenée en continu contre la face 13, 13a, 13b de réception choisie par la tête 18 de pose puis est plaquée contre elle à l'aide du galet 19 de placage par roulage entre la face 13, 13a, 13b de réception et face 14a, 14b de recouvrement de la portion latérale 12, 12a, 12b.

Le procédé selon le premier mode de réalisation de l'invention comporte ensuite une troisième étape destinée à recouvrir la partie centrale 11 à l'aide des première et deuxième portions latérales 12, 12a, 12b. Cette troisième étape permet de former la bande 5 de roulement avec au moins un bloc 3 de sculpture 2 qui enveloppe une nappe 7, 7a, 7b de renfort. En effet, chaque portion latérale 12, 12a, 12b rabattue sur sa portion centrale 11 permet de former un bloc 3 de sculpture 2 longé par une rainure 6 de part et d'autre de sa longueur dont le fond est formé à partir du creux 15 avant l'étape de recouvrement.

Dans l'exemple particulier des figures 2 et 3, cette étape peut être réalisée par exemple à l'aide d'une came 21 de déplacement. Plus précisément, la came 21 de déplacement comporte des faces 22a, 22b destinées à écarter les portions latérales 12a, 12b se faisant face en glissant sur le long du fond du creux 15. Après le passage de la came 21 de déplacement dans le creux 15, on comprend que ce dernier est agrandi et ouvert pour former peu ou prou la géométrie des rainures 6 illustrée à la figure 1.

Le procédé peut comporter en outre une étape finale de roulage. Cette étape finale pourrait ainsi permettre d'améliorer l'adhérence des portions latérales 12, 12a, 12b contre leur portion centrale 11 associée et, incidemment, de la nappe 7, 7a, 7b de renfort contre ces dernières.

Dans l'exemple particulier des figures 2 et 3, cette étape peut être réalisée par exemple à l'aide d'un galet 23 de roulage. Plus précisément, le galet 23 de roulage comporte au moins une face 24 destinée à appuyer sur chaque bloc 3 de sculpture 2 afin de faire adhérer entre eux les éléments 7, 10, 11, 12, 12a, 12b du bloc 3 de sculpture 2. Après le passage du galet 23 de roulage contre chaque bloc 3 de sculpture 2, on comprend que la surface supérieure de ce dernier est aplatie pour former peu ou prou la géométrie de la surface de roulement sensiblement plane du bandage pneumatique 1 illustrée à la figure 1.

Avantageusement selon l'invention, le procédé permet donc de former une bande 5 de roulement en matériau caoutchoutique cru dont les chutes peuvent être recyclées. Le procédé permet en outre sa mise en oeuvre à part ou directement sur une ébauche, comme par exemple sur une carcasse (non représentée), de bandage pneumatique 1. La bande 5 de roulement peut ainsi être renforcée et montée sur l'ébauche du bandage pneumatique 1 avant que l'ensemble soit réticulé.

Avantageusement selon l'invention, chaque bloc 3 de sculpture 2 est créé à partir de plusieurs portions en matériau caoutchoutique cru qui peuvent être monobloc ou non. La géométrie de la portion centrale 11 permet avantageusement de choisir l'angle que fait la nappe 7, 7a, 7b de renfort par rapport à la surface de contact de la bande 5 de roulement. L'orientation de la nappe 7, 7a, 7b de renfort contre la portion centrale 11 est maintenue par recouvrement des première et deuxième portions latérales 12, 12a, 12b. Ces dernières forment donc la partie du bandage pneumatique 1 destinée à être en contact avec le sol. On comprend également que la nappe 7, 7a, 7b de renfort peut ainsi être, avantageusement selon l'invention, de natures très variées comme par exemple à base de fibre à base de polymères ou de fil à base de métal.

L'invention se rapporte en outre à un procédé de fabrication d'un bandage pneumatique 1 utilisant le procédé de fabrication d'une bande 5 de roulement à base de matériau caoutchoutique cru selon le premier mode de réalisation tel que présenté plus haut.

À titre nullement limitatif, le procédé de fabrication d'un bandage pneumatique pourrait comporter les étapes suivantes :
- Fabriquer une carcasse à base de matériau caoutchoutique cru ;
- Monter sur la carcasse, une bande de roulement à base de matériau caoutchoutique cru à l'aide du procédé de fabrication selon le premier mode de réalisation tel que présenté plus haut ;
- Réticuler tout en moulant à chaud le bandage pneumatique à base de matériau caoutchoutique cru.

Le procédé de fabrication du bandage pneumatique 1 permet donc de réaliser une ébauche 9 de bande 5 de roulement avec au moins un bloc 3 de sculpture 2 renforcés pouvant être intégrée avec des étapes de fabrication conventionnelles de bandage pneumatique 1, c'est-à-dire sans adaptation particulière.

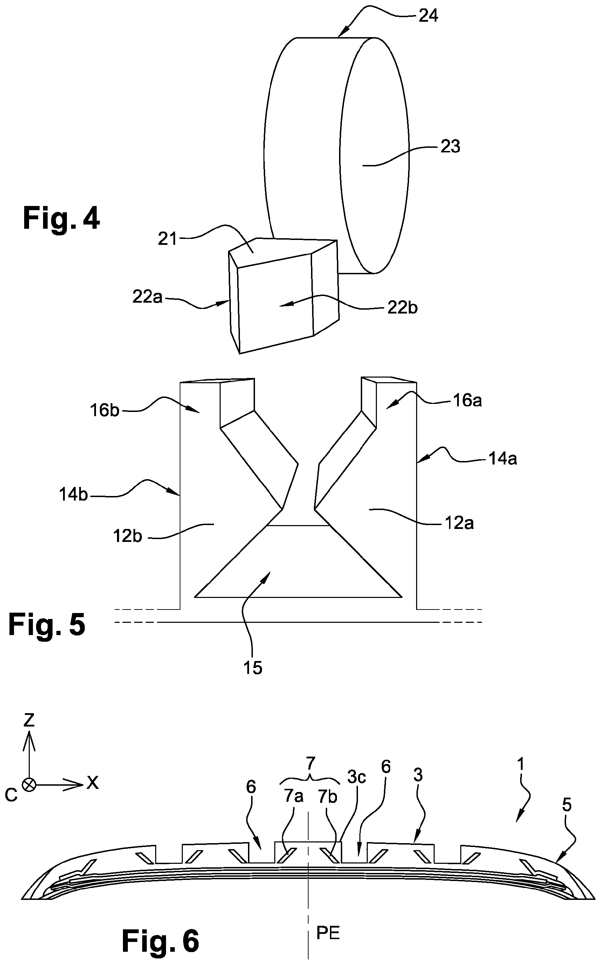

Selon une variante du premier mode de réalisation, l'étape de formation de l'ébauche 9 est adaptée afin de modifier la géométrie de l'ébauche 9 de bande 5 de roulement. Ainsi, chaque bloc 3 de sculpture 2 comporte une portion centrale 11 similaire à celle expliquée ci-dessus. Par contre, comme visible à la figure 5, chaque portion latérale 12, 12a, 12b comporte au moins une face 14, 14a, 14b du polygone qui est, de manière préférée, prolongée par des extensions 16a, 16b qui peuvent être monobloc.

Selon la variante du premier mode de réalisation, le procédé de fabrication de la bande 5 de roulement comporte ensuite des deuxième et troisième étapes et, éventuellement, l'étape finale, selon les mêmes effets et avantages que le premier mode de réalisation.

Le procédé de fabrication selon la variante du premier mode de réalisation selon l'invention permet d'obtenir un bandage pneumatique 1 dont les blocs 3 de sculpture 2 de la bande 5 de roulement (parties entre les rainures 6 circonférentielles du bandage pneumatique 1) sont rigidifiés comme illustré à la figure 6. La rigidification est obtenue par des nappes 7 de renfort présentes dans les blocs 3 de sculpture 2 orientés de manière oblique par rapport à la surface de roulement afin de limiter leur déformation pour améliorer le comportement et l'usure du bandage pneumatique 1.

Plus précisément, dans l'exemple illustré à la figure 6, on peut voir que, sur la section méridienne partielle de la bande 5 de roulement (plan de coupe orienté selon les axes X-Z) obtenue selon la variante du premier mode de réalisation de l'invention, les nappes 7 de renfort forment des profilés à section en chevrons tronqués dans chaque bloc 3 de sculpture 2.

Ainsi, pour le bloc 3c dans lequel passe le plan PE, les première 7a et deuxième 7b nappes de renfort sont symétriques par rapport au plan équatorial PE, partent sensiblement du fond de la rainure 6 adjacente (une épaisseur de matériau caoutchoutique est visible à la figure 6 entre le fond de chaque rainure 6 et chacune des nappes 7a, 7b de renfort) et s'étendent obliquement dans le bloc 3c de sculpture 2 vers le plan équatorial PE sans atteindre la surface supérieure du bloc 3c ni couper le plan équatorial PE.

On comprend que cette configuration, avantageusement selon l'invention, permet de limiter le basculement des blocs 3 de sculpture 2 lorsque le bandage pneumatique 1 est sollicité tout en ayant une épaisseur d'usure comportant uniquement du matériau caoutchoutique, c'est-à-dire notamment sans nappe 7, 7a, 7b de renfort. Il est donc déduit que les extensions 16a, 16b permettent de rajouter une épaisseur de matériau caoutchoutique au-dessus des nappes 7, 7a, 7b de renfort.

Selon un deuxième mode de réalisation, le procédé de fabrication de la bande 5 de roulement comporte une première étape destinée à former une ébauche 9 de bande 5 de roulement à base de matériau caoutchoutique cru selon les mêmes effets et avantages que le premier mode de réalisation. Toutefois, la géométrie de l'ébauche 9 de bande 5 de roulement diffère pour obtenir un autre type de bloc 3 de sculpture 2.

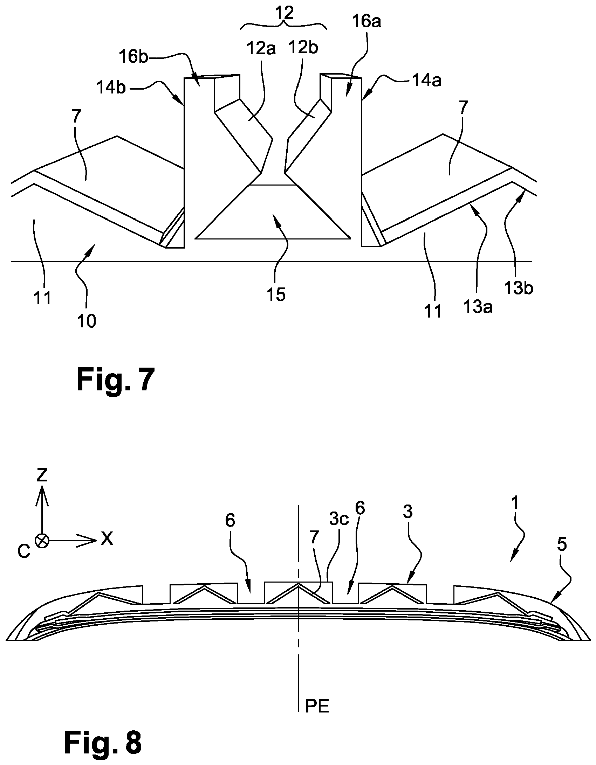

L'ébauche 9 comporte au moins un bloc 3 de sculpture 2 séparé, c'est-à-dire divisé en plusieurs portions 11, 12. Chaque bloc 3 de sculpture 2 comporte une portion centrale 11 et des première 12a et deuxième 12b portions latérales. Dans l'exemple illustré à la figure 7, on peut voir que les première 12a et deuxième 12b portions latérales s'étendent, de manière préférée, respectivement de part et d'autre de la portion centrale 11.

Pour chaque bloc 3 de sculpture 2, le profil peut ainsi comporter une portion centrale 11 de forme prismatique à base polygonale. Dans l'exemple de la figure 7, la forme prismatique est à base triangulaire. De plus, les deux faces 13a, 13b supérieures adjacentes sont destinées à recevoir une unique nappe 7 de renfort. On comprend donc que, dans le deuxième mode de réalisation, une unique nappe 7 de renfort peut être en recouvrement partiel ou total de la surface supérieure de la portion centrale 11. On comprend qu'on peut ainsi obtenir un profilé de nappe 7 de renfort de section en chevron dont l'arête supérieure est orientée vers la surface de contact de la bande 5 de roulement.

On comprend donc que la géométrie de chaque face 13a, 13b de réception permet de choisir l'orientation et la courbure, que fera la nappe 7 de renfort dans l'épaisseur du bloc 3 de sculpture 2.

Ainsi, au lieu de comporter des sections rectilignes comme illustré à la figure 8, chaque nappe 7 de renfort pourrait en variante être, par exemple, concave ou convexe en adaptant en conséquence chaque face 13, 13a, 13b de réception de la portion centrale 11. Il peut ainsi être envisagé (non représenté) que la section de la nappe 7 de renfort s'étende sous forme d'une voûte.

À titre nullement limitatif, chaque portion centrale 11 et chaque portion latérale 12 associée peuvent être reliés par une base commune 10 ce qui permet de garantir la géométrie entre les portions 11, 12 et, plus généralement, de l'ébauche 9 de la bande 5 de roulement.

Préférentiellement, chaque portion latérale 12, 12a, 12b est de forme prismatique à base polygonale. De plus, au moins une face 14, 14a, 14b du polygone est utilisée pour recouvrir au moins une partie de la portion centrale 11 permettant de coïncider avec au moins la zone de la portion centrale 11 qui sera recouverte par la nappe 7 de renfort. En outre, comme visible à la figure 7, chaque face 14, 14a, 14b du polygone est prolongée par des extensions 16a, 16b qui peuvent être monobloc.

La forme prismatique permet également de former la géométrie externe des blocs 3 de sculpture 2 de l'ébauche 9 de la bande 5 de roulement. En effet, les faces qui ne recouvrent pas la portion centrale 11 sont destinées à former tout ou partie de l'enveloppe extérieure des blocs 3 de sculpture 2.

Dans l'exemple particulier de la figure 7, on peut voir que deux portions latérales 12, 12a, 12b de deux blocs 3 de sculpture 2 différents se font face. Plus précisément, les bases triangulaires de chaque prisme des portion latérale 12a, 12b se faisant face, forment un creux 15 à profil sensiblement triangulaire, l'un des sommets du creux 15 étant formé par les arêtes des bases triangulaires des portion latérale 12a, 12b se faisant face. À la figure 7, ces arêtes ne se touchent pas, toutefois, s'agissant d'une fabrication industrielle, il est possible le cas échéant que certaines arêtes puissent se toucher.

Comme illustré à la figure 7, l'ébauche 9 de bande 5 de roulement peut donc comporter plusieurs blocs 3 de sculpture 2 divisés ce qui n'empêche pas la possibilité que l'ébauche 9 puisse être monobloc afin de garantir sa géométrie et de facilement la monter sur l'ébauche d'un bandage pneumatique 1.

En effet, l'étape de formation de l'ébauche 9 de bande 5 de roulement peut être par exemple réalisée par extrusion. Il est ainsi possible de fabriquer un profilé avec la section souhaitée pour tout ou partie de l'ébauche 9 de la bande 5 de roulement avec la longueur nécessaire au bandage pneumatique 1 à fabriquer.

Le procédé selon le deuxième mode de réalisation de l'invention comporte une deuxième étape destinée à monter au moins une nappe 7 de renfort sur au moins une partie 13, 13a, 13b de la portion centrale 11 selon les mêmes effets et avantages que la deuxième étape du premier mode de réalisation. Le procédé comporte ensuite une troisième étape destinée à recouvrir la partie centrale 11 à l'aide des première et deuxième portions latérales 12, 12a, 12b. Cette troisième étape permet de former la bande 5 de roulement avec au moins un bloc 3 de sculpture 2 qui enveloppe une nappe 7 de renfort selon les mêmes effets et avantages que la troisième étape du premier mode de réalisation.

Le procédé selon le deuxième mode de réalisation de l'invention peut comporter enfin une étape finale de roulage selon les mêmes effets et avantages que l'étape finale du premier mode de réalisation.

Avantageusement selon le deuxième mode de réalisation de l'invention, le procédé permet donc de former une bande 5 de roulement en matériau caoutchoutique cru dont les chutes peuvent être recyclées. Le procédé permet en outre sa mise en oeuvre à part ou directement sur une ébauche, comme par exemple sur une carcasse (non représentée), de bandage pneumatique 1. La bande 5 de roulement peut ainsi être renforcée et montée sur l'ébauche du bandage pneumatique 1 avant que l'ensemble soit réticulé.

Avantageusement selon l'invention, chaque bloc 3 de sculpture 2 est créé à partir de plusieurs portions en matériau caoutchoutique cru qui peuvent être monobloc ou non. La géométrie de la portion centrale 11 permet avantageusement de choisir la géométrie que fait la nappe 7 de renfort par rapport à la surface de contact de la bande 5 de roulement. L'orientation de la nappe 7 de renfort contre la portion centrale 11 est maintenue par recouvrement des première et deuxième portions latérales 12, 12a, 12b. Ces dernières forment donc la partie du bandage pneumatique 1 destinée à être en contact avec le sol. On comprend également que la nappe 7 de renfort peut ainsi être, avantageusement selon l'invention, de natures très variées comme par exemple à base de fibre à base de polymères ou de fil à base de métal.

L'invention se rapporte en outre à un procédé de fabrication d'un bandage pneumatique 1 utilisant le procédé de fabrication d'une bande 5 de roulement à base de matériau caoutchoutique cru selon le deuxième mode de réalisation tel que présenté plus haut.

À titre nullement limitatif, le procédé de fabrication d'un bandage pneumatique pourrait comporter les étapes suivantes :
- Fabriquer une carcasse à base de matériau caoutchoutique cru ;
- Monter sur la carcasse, une bande de roulement à base de matériau caoutchoutique cru à l'aide du procédé de fabrication selon le deuxième mode de réalisation tel que présenté plus haut ;
- Réticuler en moulant à chaud le bandage pneumatique à base de matériau caoutchoutique cru.

Le procédé de fabrication du bandage pneumatique 1 permet donc de réaliser une ébauche 9 de bande 5 de roulement avec au moins un bloc 3 de sculpture 2 renforcés pouvant être intégrée avec des étapes de fabrication conventionnelles de bandage pneumatique 1, c'est-à-dire sans adaptation particulière.

Selon un deuxième mode de réalisation, le procédé de fabrication selon l'invention permet d'obtenir un bandage pneumatique 1 dont les blocs 3 de sculpture 2 de la bande 5 de roulement (parties entre les rainures 6 circonférentielles du bandage pneumatique 1) sont rigidifiés comme illustré à la figure 8. La rigidification est obtenue par une nappe 7 de renfort présente dans chaque bloc 3 de sculpture 2 et orientée de manière oblique par rapport à la surface de roulement afin de limiter leur déformation pour améliorer le comportement et l'usure du bandage pneumatique 1.

Plus précisément, dans l'exemple illustré à la figure 8, on peut voir que, sur la section méridienne partielle de la bande 5 de roulement (plan de coupe orienté selon les axes X-Z) obtenue selon le deuxième mode de réalisation de l'invention, chaque nappe 7 de renfort forment un profilé à section en chevron dans chaque bloc 3 de sculpture 2.

Ainsi, pour le bloc 3c dans lequel passe le plan PE, la nappe 7 de renfort est symétrique par rapport au plan équatorial PE, part sensiblement du fond de la rainure 6 adjacente (une épaisseur de matériau caoutchoutique est visible à la figure 8 entre le fond de chaque rainure 6 et chacune des extrémités de la nappe 7 de renfort) et s'étend obliquement dans le bloc 3c de sculpture 2 vers le plan équatorial PE en se rejoignant dans le plan équatorial PE sans arriver jusqu'à la surface supérieure du bloc 3c. On comprend que cette configuration, avantageusement selon l'invention, permet de limiter le basculement des blocs 3 de sculpture 2 lorsque le bandage pneumatique 1 est sollicité tout en ayant une épaisseur d'usure comportant uniquement du matériau caoutchoutique, c'est-à-dire notamment sans nappe 7 de renfort. Il est donc déduit que les extensions 16a, 16b permettent de rajouter une épaisseur de matériau caoutchoutique au-dessus des nappes 7 de renfort.

L'invention n'est pas limitée aux modes de réalisation et variantes présentés et d'autres modes de réalisation et variantes apparaîtront clairement à l'homme du métier. Il est notamment possible, comme pour la première variante du premier mode de réalisation ou le deuxième mode de réalisation, de faire évoluer la forme de l'ébauche 9 suivant les applications notamment quant aux géométries et dimensions des portions centrales 11 et/ou des portion latérale 12, 12a, 12b et/ou de la base 10. À titre nullement limitatif, le premier mode de réalisation et/ou la variante du premier mode de réalisation et/ou le deuxième mode de réalisation pourraient être combinés dans une même bande 5 de roulement et/ou dans un même bloc 3 de sculpture 2 suivant les applications.

De manière similaire, la même bande 5 de roulement pourrait comporter des nappes 7, 7a, 7b de renfort de matériaux différents entre deux blocs 3 de sculpture 2 ou dans le même bloc 3 de sculpture 2 suivant les applications.

## Revendications

1. Procédé de fabrication d'une bande (5) de roulement à base de matériau caoutchoutique cru, **caractérisé en ce qu'**il comporte les étapes suivantes :
- former une ébauche (9) de bande de roulement à base de matériau caoutchoutique cru comportant au moins un bloc (3) de sculpture (2), chaque bloc (3) de sculpture (2) comportant une portion centrale (11) présentant des faces de réception (13a, 13b), et une première portion latérale (12a) et une seconde portion latérale (12b) s'étendant le long de la portion centrale (11), de part et d'autre de la portion centrale (11) ;
- monter au moins une nappe (7, 7a, 7b) de renfort sur les faces de réception (13a, 13b) de la portion centrale (11) ;
- recouvrir la portion centrale (11) à l'aide de la première portion latérale (12a) et de la seconde portion latérale (12b) afin que le bloc (3) de sculpture (2) enveloppe l'au moins une nappe (7, 7a, 7b) de renfort
de sorte que l'au moins une nappe de renfort (7, 7a, 7b) forme un profilé à section en chevrons dans le bloc (3) de sculpture.

2. Procédé selon la revendication précédente, dans lequel chaque portion centrale (11) et sa portion latérale (12) associée sont reliés par une base (10).

3. Procédé selon l'une quelconque des revendications précédentes, dans lequel la portion centrale (11) est de forme prismatique à base trapézoïdale dont les deux faces non parallèles forment les faces de réception (13a, 13b) destinées à recevoir chacune une nappe de renfort (7a, 7b).

4. Procédé selon la revendication 1 ou 2, dans lequel la portion centrale (11) est de forme prismatique à base triangulaire dont deux faces adjacentes (13a, 13b) sont destinées à recevoir la nappe (7) de renfort.

5. Procédé selon l'une quelconque des revendications précédentes, dans lequel chaque portion latérale (12) est de forme prismatique à base polygonale dont au moins une face (14) est utilisée pour recouvrir une partie de la portion centrale (11).

6. Procédé selon l'une quelconque des revendications précédentes, dans lequel l'ébauche (9) de bande (5) de roulement comporte plusieurs blocs (3) de sculpture (2).

7. Procédé selon l'une quelconque des revendications précédentes, dans lequel l'ébauche (9) de bande (5) de roulement est monobloc.

8. Procédé selon l'une quelconque des revendications précédentes, dans lequel l'étape de formation de l'ébauche (9) de bande (5) de roulement est réalisée par extrusion.

9. Procédé selon l'une quelconque des revendications précédentes, comportant en outre une étape finale de roulage permettant d'améliorer l'adhérence de la portion latérale (12) contre sa portion centrale (11) associée.

10. Procédé de fabrication d'un bandage pneumatique, **caractérisé en ce qu'**il comporte une étape de fabrication de la bande (5) de roulement réalisée par le procédé de fabrication selon l'une quelconque des revendications précédentes.

## Patentansprüche

1. Verfahren zur Herstellung eines Laufstreifens (5) auf Basis von Kautschuk-Rohmaterial, **dadurch gekennzeichnet, dass** es die folgenden Schritte umfasst:
- Bilden eines Rohlings (9) eines Laufstreifens auf Basis von Kautschuk-Rohmaterial, umfassend mindestens einen Block (3) eines Profils (2), wobei jeder Block (3) eines Profils (2) einen mittleren Abschnitt (11), der Aufnahmeflächen (13a, 13b) aufweist, und einen ersten seitlichen Abschnitt (12a) und einen zweiten seitlichen Abschnitt (12b), die sich entlang des mittleren Abschnitts (11), zu beiden Seiten des mittleren Abschnitts (11), erstrecken, umfasst;
- Anbringen mindestens einer Verstärkungslage (7, 7a, 7b) auf den Aufnahmeflächen (13a, 13b) des mittleren Abschnitts (11);
- Bedecken des mittleren Abschnitts (11) mithilfe des ersten seitlichen Abschnitts (12a) und des zweiten seitlichen Abschnitts (12b), damit der Block (3) des Profils (2) die mindestens eine Verstärkungslage (7, 7a, 7b) umhüllt,
so dass die mindestens eine Verstärkungslage (7, 7a, 7b) ein Muster mit Zickzack-Querschnitt in dem Block (3) des Profils bildet.

2. Verfahren nach dem vorhergehenden Anspruch, wobei jeder mittlere Abschnitt (11) und sein zugehöriger seitlicher Abschnitt (12) durch eine Basis (10) verbunden sind.

3. Verfahren nach einem der vorhergehenden Ansprüche, wobei der mittlere Abschnitt (11) die Form eines Prismas mit trapezförmiger Grundfläche hat, bei dem die beiden nicht parallele Flächen die Aufnahmeflächen (13a, 13b) bilden, die dazu bestimmt sind, jeweils eine Verstärkungslage (7a, 7b) aufzunehmen.

4. Verfahren nach Anspruch 1 oder 2, wobei der mittlere Abschnitt (11) die Form eines Prismas mit dreieckiger Grundfläche hat, bei dem zwei benachbarte Flächen (13a, 13b) dazu bestimmt sind, die Verstärkungslage (7) aufzunehmen.

5. Verfahren nach einem der vorhergehenden Ansprüche, wobei jeder seitliche Abschnitt (12) die Form eines Prismas mit polygonaler Grundfläche hat, bei dem mindestens eine Fläche (14) dazu verwendet wird, einen Teil des mittleren Abschnitts (11) zu bedecken.

6. Verfahren nach einem der vorhergehenden Ansprüche, wobei der Rohling (9) des Laufstreifens (5) mehrere Blöcke (3) eines Profils (2) umfasst.

7. Verfahren nach einem der vorhergehenden Ansprüche, wobei der Rohling (9) des Laufstreifens (5) einstückig ist.

8. Verfahren nach einem der vorhergehenden Ansprüche, wobei der Schritt des Bildens des Rohlings (9) des Laufstreifens (5) durch Extrusion ausgeführt wird.

9. Verfahren nach einem der vorhergehenden Ansprüche, umfassend ferner einen abschließenden Schritt des Rollens, der es ermöglicht, die Haftung des seitlichen Abschnitts (12) an seinem zugehörigen mittleren Abschnitt (11) zu verbessern.

10. Verfahren zur Herstellung eines Luftreifens, **dadurch gekennzeichnet, dass** es einen Schritt der Herstellung des Laufstreifens (5) umfasst, der mit dem Verfahren zur Herstellung nach einem der vorhergehenden Ansprüche ausgeführt wird.

## Claims

1. Process for manufacturing a tread (5) based on a green rubber material, **characterized in that** it comprises the following steps :
- form a rough (9) tread based on green rubber material comprising at least one block (3) of tread pattern (2), each block (3) of tread pattern (2) comprising a central portion (11) having receiving faces (13a, 13b), and a first lateral portion (12a) and a second lateral portion (12b) extending along the central portion (11), on either side of the central portion (11) ;
- mount at least one reinforcement (7, 7a, 7b) ply on the receiving faces (13a, 13b) of the central portion (11),
- cover the central portion (11) with the first lateral portion (12a) and the second lateral portion (12b) so that the block (3)of tread pattern (2) envelops the at least one reinforcement (7, 7a, 7b) ply so that the at least one reinforcement (7, 7a, 7b) ply forms a herringbone-section profile in the block (3) of tread pattern.

2. The process according to the preceding claim, in which each central portion (11) and its associated lateral portion (12) are connected by a base (10).

3. The process according to any of the preceding claims, in which the central portion (11) is prismatic in shape with a trapezoidal base, the two non-parallel faces of which close the receiving faces (13a, 13b) each intended to receive a reinforcement ply (7a, 7b).

4. The process according to claim 1 or 2, in which the central portion (11) is prismatic in shape with a triangular base, two adjacent faces (13a, 13b) of which are designed to receive the reinforcement ply (7).

5. The process according to any of the preceding claims, in which each lateral portion (12) is of prismatic shape with a polygonal base, at least one face (14) of which is used to cover part of the central portion (11).

6. The process according to any of the preceding claims, in which the rough (9) tread (5) comprises a plurality of blocks (3) of tread pattern (2).

7. The process according to any of the preceding claims, wherein the rough (9) tread (5) is in one piece.

8. The process according to any of the preceding claims, in which the step of forming the rough (9) tread (5) is carried out by extrusion.

9. The process according to any of the preceding claims, further comprising a final rolling step to improve the grip of the lateral portion (12) against its associated central portion (11).

10. The process of manufacturing a pneumatic tire, **characterized in that** it comprises a step of manufacturing the tread (5) by the manufacturing process of any one of the preceding claims.
